# EUROPEAN PATENT SPECIFICATION

(11) **EP 3 502 551 B1**
(45) Date of publication and mention of the grant of the patent: **12.08.2020**
(21) Application number: 18213691.1
(22) Date of filing: 18.12.2018
(51) Int. Cl.: F21S 41/20, F21S 41/32, F21S 43/20, F21S 43/31, F21S 41/141, G02B 27/09, G02B 19/00, F21S 41/63, F21S 41/24

(54) **LIGHTING DEVICE FOR VEHICLES**
BELEUCHTUNGSVORRICHTUNG FÜR FAHRZEUGE
DISPOSITIF D'ÉCLAIRAGE POUR VÉHICULES

(30) Priority: 19.12.2017 IT 201700146578
(43) Date of publication of application: 26.06.2019
(73) Proprietor: Marelli Automotive Lighting Italy S.p.A., 10078 Venaria Reale (TO) (IT)
(72) Inventor: LOVATO, Piero, 10078 VENARIA REALE (TO) (IT); RENARD, Stéphanie, 10078 VENARIA REALE (TO) (IT)
(74) Representative: Plebani, Rinaldo

(56) References cited:
- EP-A1- 1 895 228
- EP-A1- 2 818 791
- EP-A2- 2 479 486
- EP-A2- 2 693 105
- WO-A1-2016/198329
- WO-A1-2017/162474
- FR-A1- 3 021 606
- FR-A1- 3 050 010

## Description

### Technical background of the invention

The present invention relates to a lighting device for vehicles, which also offers considerable versatile use, in addition to high performance and compactness.

### Prior Art

Currently, the most popular lighting devices for vehicles both regarding the affordability and the efficiency thereof are LED lighting devices. However, such devices are relatively cumbersome and not particularly versatile, hence the request to develop *ad hoc* devices for each desired lighting function, which also causes increased costs due to a lack of standardization. Furthermore, the known devices frequently require reflecting elements, which can be cumbersome or difficult to install. FR3050010A1 *does not solve these problems.*

### Summary of the invention

The object of the present invention is to provide a lighting device for vehicles, which is compact, simple and cheap to produce, which allows the use of additional reflecting elements to be avoided or limited, such as, for example, reflecting or shielding elements and, in particular, which is versatile, being able to be used to achieve different functions or parts thereof, for example, dazzling beam or HB (High Beam), dipped beam or LB (Low Beam), fog light, only with slight modifications to a limited number of components.

Consequently, a lighting device for vehicles according to the invention is provided, having the features presented in the appended claims.

### Brief Description of the Drawings

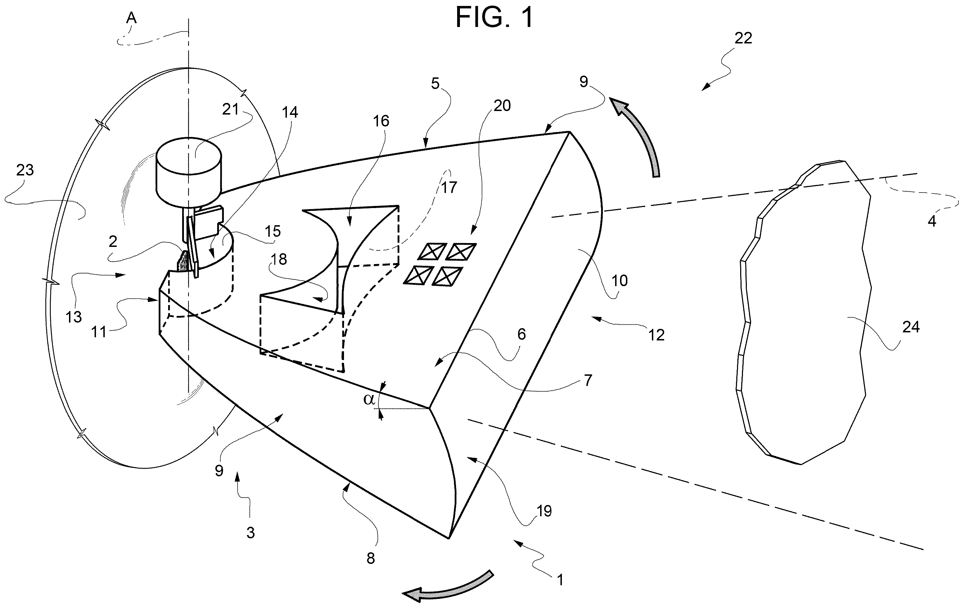

Further features and advantages of the present invention will become clearer from the description below of a non-limiting embodiment thereof, made with reference to the figure in the appended drawing, which schematically illustrates a front three quarters perspective view from above, with parts removed for simplicity, of a lighting device made according to the invention.

### Detailed Description

With reference to the single figure in the appended drawing, a lighting device for vehicles is globally indicated with 1, comprising at least one LED light source 2 and an optical system 3 for collecting and distributing, according to a desired photometric profile, known and not illustrated for simplicity, the light produced by the LED light source 2 forming, exiting the lighting device 1, a shaped light beam 4, controlled both horizontally and vertically.

The LED light source 2 can be any known LED light source, provided with a single LED or a plurality of LEDs arranged according to a matrix, for example side by side in a single row, mounted on a printed circuit board.

The optical system 3 comprises a light guide 5 formed by a block 6 of material normally pervious to light, for example, made as a solid and isotropic block of a polycarbonate, plexiglass and/or glass.

According to the main aspect of the invention, the block 6 of material normally pervious to light is shaped in order to define a solid wedge-shaped three-dimensional element, delimited among an upper face 7 thereof, a lower face 8 thereof, opposed to the face 7 and facing thereto, two opposite lateral surfaces 9 thereof, preferably symmetrical and of which only one is clearly visible in the appended drawing, one or more front face 10 thereof and one or more rear face 11 thereof, in the sense that in the illustrated, non-limiting example a single front face 10 and a single rear face 11 are present, but these could be made as multifaceted surfaces, thus composed each of several adjacent faces, angled among one another.

The front face/s 10 defines/define a first longitudinal end 12 of the wedge-shaped block 6 of material normally pervious to light, while the rear face/s 11 defines/define a second longitudinal end 13 thereof, opposed to the longitudinal end 12.

According to a first aspect of the invention, the lateral surfaces 9 are curved and converge towards each other on the side of the second longitudinal end 13, so that the block 6 of material normally pervious to light widens, fanning out towards the first end 12; furthermore, the opposite curved lateral surfaces 9 are configured to cause a total (or at least partial) internal reflection of the light within the block 6 of material normally pervious to light.

More specifically, the curved lateral surfaces 9 are configured to form curved reflectors adapted to control, mainly horizontally, i.e. preferably in a significantly horizontal direction, the light beam 4 exiting the device 1; specifically, as will be seen in greater detail below, the light beam 4 is formed, in the illustrated example, by the front face/s 10 and it is emitted thereby or therethrough outside of the block 6 of material normally pervious to light, at the front, on the side of the longitudinal end 12.

According to a further aspect of the invention, the rear face/s 11 is/are arranged facing the LED light source 2 and is/are provided with (or they define among one another) a concavity 14, which surrounds, at least partially, the LED light source 2 and which is delimited by a first, arc-shaped curved surface 15.

The curved surface 15 is made as a surface configured to collect and shape at least part of the light emitted by the LED light source 2 and inject it in the light guide 5 formed by the block 6 of material normally pervious to light.

According to a third aspect of the invention, the block 6 of material normally pervious to light is crossed by at least one perforation 16, which is through (as in the illustrated non-limiting example) or blind, or, according to possible variations not illustrated for simplicity, by several through (or blind) perforations 16, made transversally, preferably perpendicularly to the upper 7 and lower faces 8 of the block 6 of material normally pervious to light; the at least one perforation 16 is interposed between the front face/s 10 and the at least one rear face/s 11 and it is delimited internally by a first optical surface 17 arranged facing the front face/s 10 and by a second optical surface 18 arranged facing the rear face/s 11.

The perforation 16 is configured to define an air lens interposed between the concavity 14 of the rear face/s 11 and the front face/s 10 and which shapes the light beam 4 between the concavity 14 of the rear face 11 and the front face 10. The front face 10 is then defined, according to a further aspect of the invention, by a second curved surface 19, configured to collect the light from the inside of the block 6 of material normally pervious to light, to form and emit, outside of the same, the shaped light beam 4, which is controlled at least vertically (not necessarily in only one direction) by the conformation, in particular, by the curvature, of the surface 19.

The second curved surface 19 is a general optical surface dedicated to the formation of the light beam and can generally be curved in several directions. The curvature of the surface 19 can thus be simple, for example, defined by an ellipse section, a parabola section, etcetera, or complex, being defined by a plurality of stretches of conics differing by equation and/or type joined to one another with continuity (in the first or second order) or not.

In the illustrated embodiment, the second curved surface 19 is defined by the rectilinear translation of at least one curve transversally to the opposite lateral surfaces 9.

According to another aspect of the invention, the upper face 7 and the lower face 8 are substantially flat and they are not made parallel to each other.

According to one embodiment of the invention, one of the two upper 7 and lower faces 8, or both, is/are arranged obliquely with respect to a horizontal plane, for example, inclined by one same or a different angle α, so that both the upper and lower faces 7, 8, converge towards each other on the side of the second longitudinal end 13, causing a progressive decrease of a thickness, measured vertically, of the block 6 of material normally pervious to light towards the second longitudinal end 13 thereof. Whereas, according to an alternative embodiment of the invention, not illustrated for simplicity, both the upper and lower faces 7, 8, are made so that they converge towards each other on the side of the first longitudinal end 12, causing a progressive decrease of a thickness, measured vertically, of the block 6 of material normally pervious to light towards the first longitudinal end 12 thereof.

Especially in the case when the device 1 is designed to constitute a front high beam headlamp or fog light, the upper face 7 (and/or also the lower face 8, depending on the cases and/or specific lighting needs) is provided with a plurality of embossings 20, for example, prism-shaped, configured to selectively remove part of the light emitted by the LED light source 2 and collected from the curved surface 15, in order to define, exiting the front face 10, a light beam 4 provided with a light-dark demarcation line (also known as cut-off).

At least one of the optical surfaces 17, 18 is preferably convex and shaped as a continuous curved surface or as a stepped discontinuous surface formed by curved and/or rectilinear sections.

In any case, both optical surfaces 17, 18 can be concave and/or convex. Preferably, they are convex and, nonetheless, they are shaped so that the perforation 16 thins in the center/midpoint of the block 6 of material normally pervious to light and widens towards the curved lateral surfaces 9 of the latter. According to a possible variation, not shown for simplicity, the optical surfaces 17, 18 can both be concave and, in any case, they are shaped so that the perforation 16 widens in the center of the block 6 of material normally pervious to light and thins towards the curved lateral surfaces 9 of the latter.

According to a possible embodiment, the optical system 3 further comprises, besides the light guide 5, an actuator 21 (for example, formed by an electric motor) for rotating the light guide 5 about an axis A passing through the LED light source 2; the concavity 14 is also made so that the axis A also forms the axis of symmetry of the curved surface 15.

Preferably, the axis A passing through the LED light source 2 is a substantially vertical axis, so that the actuator 21 can rotate the light guide 5, for example, on an angular arc limited by 30° horizontally, both to the right and to the left, in order to also make the light beam 4 rotate with respect to a vehicle provided with the lighting device 1, for example, to follow a curve, or especially in the case when the lighting device 1 is used as an auxiliary lighting device for a fixed traditional lighting device, such as a front headlamp, to locally increase, in different points, the lighting generated by the main headlamp.

The lighting device 1 is, in fact, preferably incorporated in a headlamp or a headlight of a vehicle 22, illustrated only schematically, comprising at least one lighting device 1 according to what has been illustrated thus far. The lighting device 1 is housed inside a cup-shaped casing 23 and designed to be mounted on a vehicle, and a transparent cover 24 closes the cup-shaped casing 23 at the front; the lighting device 1 is visible through the transparent cover 24 from the outside and emits the light beam 4.

Therefore, the invention also relates to a vehicle comprising a headlamp or headlight 22, preferably a couple of headlamps or headlights 22, which are symmetrical to each other, incorporating the lighting device 1 with one or more lighting devices of the same type as the device 1 or of a traditional type.

Based on the description, clearly the light guide 5 includes and performs all of the (or at least most of the) optical functions requested of the device 1 and efficiently lends itself to collecting the light emitted both from a light source 2 provided with a single LED and from a light source 2 provided with a sequence of LEDS, which are aligned with one another, for example, along the axis A. The light potentially not collected from the concavity 14 can be recovered by means of auxiliary reflectors arranged above or below the light guide 5.

Different optical functions can be obtained by producing the light guides 5 with standard external dimensions, which are substantially identical, but provided with surfaces 9, 15, 11 and 19, differing by type, curvature and dimensions, allowing the position and dimensions of all of the other components of the lighting device to be standardized.

Lastly, it is possible to obtain a mobility, for example, a horizontal mobility, of the light beam 4 generated by the device 1 without substantially losing part of the light emitted by the light source 2, allowing elevated efficiency to be maintained.

Finally, it is clear that, by rotating the described device 1 by 90° in order to position the axis A horizontally, the mobility of the light beam 4 can be obtained in a vertical direction.

Consequently, all of the objects of the invention are achieved.

## Claims

1. A lighting device (1) for vehicles, comprising at least one LED light source (2) and an optical system (3) for collecting and distributing, according to a desired photometric profile, the light produced by said LED light source (2); the optical system (3) comprising a light guide (5) formed by a block (6) of material normally pervious to light; wherein, in combination:
i)- the block (6) of material normally pervious to light is shaped in order to define a solid wedge-shaped three-dimensional element, delimited among an upper face (7) thereof, a lower face (8) thereof, two opposite lateral surfaces (9) thereof, at least a front face (10) thereof defining a first longitudinal end (12) thereof and at least a rear face (11) thereof, defining a second longitudinal end (13) thereof, opposed to the first longitudinal end (12);
ii)- the lateral surfaces (9) are curved and converge towards each other on the side of said second longitudinal end (13), so that the block (6) of material normally pervious to light widens fanning out towards the first end (12); said opposite curved lateral surfaces (9) being configured in order to cause a total, or at least partial, internal reflection of the light within the block (6) of material normally pervious to light;
iii)- the at least one rear face (11) is arranged facing said at least one LED light source (2) and is provided with, or defines, a concavity (14), which surrounds, at least partially, said at least one LED light source (2) and which is delimited by a first arc-shaped curved surface (15) configured to collect at least part of the light emitted by said at least one LED light source (2) within the block (6) of material normally pervious to light;
iv)- the block (6) of material normally pervious to light is crossed by at least one perforation (16) made transversally to said upper (7) and lower faces (8) and interposed between the front face (10) and the rear face (11); the at least one perforation (16) being delimited internally by a first optical surface (17) arranged facing the front face (10), and by a second optical surface (18) arranged facing the rear face (11), the at least one perforation (16) being configured to define an air lens interposed between the concavity (14) of the at least one rear face (11) and the at least one front face (10);
**characterized in that**
v) - the upper face (7) and/or the lower face (8) is arranged obliquely with respect to a horizontal plane, so that both the upper and lower faces converge towards each other
either
vi)- on the side of said second longitudinal end (13) causing a progressive decrease of a thickness, measured vertically, of the block (6) of material normally pervious to light towards the second longitudinal end (13) thereof;
or
vii)- on the side of said first longitudinal end (12) causing a progressive decrease of a thickness, measured vertically, of the block (6) of material normally pervious to light towards the first longitudinal end (12) thereof.

2. The lighting device according to claim 1, **characterized in that** the at least one front face (10) is defined by a second curved surface (19) configured to collect the light from the inside of the block (6) of material normally pervious to light, to form and emit outside a shaped light beam (4), controlled at least in a vertical direction.

3. The lighting device according to any one of the preceding claims, **characterized in that** the upper face (7) and the lower face (8) are substantially flat and not parallel to each other.

4. The lighting device according to any one of the preceding claims, **characterized in that** the upper face (7) and/or the lower face (8) is provided with a plurality of embossings (20) configured to selectively remove part of the light emitted by the LED light source (2) and collected from the first curved surface (15), in order to define, exiting the front face (10), a light beam (4) provided with a light-dark demarcation line or cut-off.

5. The lighting device according to any one of the preceding claims, **characterized in that** said opposite curved lateral surfaces (9) are configured to form curved reflectors adapted to control, in particular, horizontally, an exiting light beam (4) formed by the front face (10) and emitted thereby outside of the block (6) of material normally pervious to light.

6. The lighting device according to any one of the preceding claims, **characterized in that** at least one, or both, of said first and second optical surfaces (17, 18) is convex and/or concave and shaped as a continuous curved surface or as a stepped discontinuous surface formed by curved and/or rectilinear sections.

7. The lighting device according to any one of the preceding claims, **characterized in that** both of said first and second optical surfaces (17, 18) are shaped so that said at least one perforation (16)
- thins in the center of said block (6) of material normally pervious to light and widens towards said curved lateral surfaces (9) of the latter; or
- widens in the center of said block (6) of material normally pervious to light and thins towards said curved lateral surfaces (9) of the latter.

8. The lighting device according to any one of the preceding claims, **characterized in that** said optical system (3) comprises an actuator (21) for rotating said light guide (5) about an axis (A) passing through said at least one LED light source (2) and constituting an axis of symmetry of said first curved surface (15); said axis (A) passing through said at least one LED light source (2) preferably being a substantially vertical axis.

9. A headlamp or headlight of a vehicle (22) **characterized in that** it comprises at least one lighting device (1) according to one of the claims from 1 to 8 housed inside a cup-shaped casing (23) and designed to be mounted on a vehicle and a transparent cover (24), which closes the cup-shaped casing at the front and through which said lighting device (1) is visible from the outside.

10. A vehicle comprising a headlamp or a headlight according to claim 9.

## Patentansprüche

1. Beleuchtungsvorrichtung (1) für Fahrzeuge, umfassend mindestens eine LED-Lichtquelle (2) und ein optisches System (3) zum Sammeln und Verteilen, gemäß einem gewünschten photometrischen Profil, des von der LED-Lichtquelle (2) erzeugten Lichts; wobei das optische System (3) einen Lichtleiter (5) umfasst, der durch einen Block (6) aus normalerweise lichtdurchlässigem Material geformt wird; wobei in Kombination
i) - der Block (6) aus normalerweise lichtdurchlässigem Material so geformt ist, dass er ein massives keilförmiges dreidimensionales Element definiert, das begrenzt ist zwischen einer Oberseite (7), einer Unterseite (8), zwei gegenüberliegenden Seitenflächen (9), mindestens einer Vorderseite (10), die ein erstes Längsende (12) definiert, und mindestens einer Rückseite (11), die ein zweites Längsende (13) definiert, das dem ersten Längsende (12) gegenüberliegt;
ii) - die Seitenflächen (9) gekrümmt sind und auf der Seite des zweiten Längsendes (13) aufeinander zulaufen, so dass der Block (6) aus normalerweise lichtdurchlässigem Material sich zum ersten Ende (12) hin auffächert; wobei die einander gegenüberliegenden gekrümmten Seitenflächen (9) so konfiguriert sind, dass sie eine vollständige oder zumindest teilweise innere Reflexion des Lichts innerhalb des Blocks (6) aus normalerweise lichtdurchlässigem Material bewirken;
iii) - die mindestens eine hintere Fläche (11) ist gegenüber der mindestens einen LED-Lichtquelle (2) angeordnet und versehen ist mit einer, oder definiert eine, Konkavität (14), welche die mindestens eine LED-Lichtquelle (2) zumindest teilweise umgibt und die durch eine erste bogenförmig gekrümmte Oberfläche (15) begrenzt ist, die so konfiguriert ist, dass sie mindestens einen Teil des von der mindestens einen LED-Lichtquelle (2) emittierten Lichts innerhalb des Blocks (6) aus normalerweise lichtdurchlässigem Material sammelt;
iv)- der Block (6) aus normalerweise lichtdurchlässigem Material wird von mindestens einer Perforation (16) durchkreuzt, die quer zu der Oberseite (7) und der Unterseite (8) verläuft und zwischen der Vorderseite (10) und der Rückseite (11) angeordnet ist; wobei die mindestens eine Perforation (16) innen begrenzt ist durch eine erste optische Oberfläche (17), die gegenüber der Vorderseite (10) angeordnet ist, und durch eine zweite optische Oberfläche (8), die gegenüber der Rückseite (11) angeordnet ist, wobei die mindestens eine Perforation (16) so konfiguriert ist, dass sie eine Luftlinse definiert, die zwischen der Konkavität (14) der mindestens einen Rückseite (11) und der mindestens einen Vorderseite (10) eingefügt ist;
**dadurch gekennzeichnet, dass**
v)- die obere Fläche (7) und/oder die untere Fläche (8) bezogen auf eine horizontale Ebene schräg angeordnet ist, so dass sowohl die obere als auch die untere Fläche zueinander konvergieren, entweder
vi)- auf der Seite des zweiten longitudinalen Endes (13), was eine fortschreitende Abnahme einer Dicke, vertikal gemessen, des Blocks (6) aus normalerweise lichtdurchlässigem Material zum zweiten longitudinalen Ende (13) hin bewirkt;
oder
vii)- auf der Seite des ersten longitudinalen Endes (12), was eine fortschreitende Abnahme einer Dicke, vertikal gemessen, des Blocks (6) aus normalerweise lichtdurchlässigem Material zum ersten longitudinalen Ende (12) hin bewirkt.

2. Beleuchtungsvorrichtung nach Anspruch 1, **dadurch gekennzeichnet, dass** die mindestens eine Stirnfläche (10) durch eine zweite gekrümmte Fläche (19) definiert ist, die so konfiguriert ist, dass sie das Licht aus dem Inneren des Blocks (6) aus normalerweise lichtdurchlässigem Material sammelt, um einen geformten Lichtstrahl (4) zu bilden und nach außen abzugeben, der mindestens in vertikaler Richtung gelenkt wird.

3. Beleuchtungsvorrichtung nach einem der vorstehenden Ansprüche, **dadurch gekennzeichnet, dass** die obere Fläche (7) und die untere Fläche (8) im Wesentlichen eben und nicht parallel zueinander sind.

4. Beleuchtungsvorrichtung nach einem der vorhergehenden Ansprüche, **dadurch gekennzeichnet, dass** die obere Fläche (7) und/oder die untere Fläche (8) mit einer Vielzahl von Prägungen (20) versehen ist, die so konfiguriert sind, dass sie selektiv einen Teil des von der LED-Lichtquelle (2) ausgesandten und von der ersten gekrümmten Fläche (15) gesammelten Lichts entfernen, um beim Austritt aus der Vorderseite (10) einen Lichtstrahl (4) zu definieren, der mit einer Hell-Dunkel-Grenzlinie oder - Abgrenzung versehen ist.

5. Beleuchtungsvorrichtung nach einem der vorstehenden Ansprüche, **dadurch gekennzeichnet, dass** die genannten gegenüberliegenden gekrümmten Seitenflächen (9) so gestaltet sind, dass sie gekrümmte Reflektoren bilden, die geeignet sind, insbesondere horizontal, ein austretendes Lichtbündel (4) zu lenken, das von der Vorderseite (10) gebildet wird und von dieser außerhalb des Blocks (6) aus normalerweise lichtdurchlässigem Material emittiert wird.

6. Beleuchtungsvorrichtung nach einem der vorstehenden Ansprüche, **dadurch gekennzeichnet, dass** mindestens eine oder beide der ersten und zweiten optischen Flächen (17, 18) konvex und/oder konkav sind und als eine kontinuierliche gekrümmte Fläche oder als eine gestufte diskontinuierliche Fläche geformt sind, die durch gekrümmte und/oder geradlinige Abschnitte gebildet wird.

7. Die Beleuchtungsvorrichtung nach einem der vorhergehenden Ansprüche, **dadurch gekennzeichnet, dass** sowohl die erste als auch die zweite optische Oberfläche (17, 18) so geformt sind, dass die mindestens eine Perforation (16)
- sich in der Mitte des Blocks (6) aus normalerweise lichtdurchlässigem Material verjüngt und sich zu den gekrümmten Seitenflächen (9) des letzteren hin verbreitert; oder
- in der Mitte des Blocks (6) aus normalerweise lichtdurchlässigem Material verbreitert und sich zu den gekrümmten Seitenflächen (9) des letzteren hin verjüngt.

8. Beleuchtungsvorrichtung nach einem der vorhergehenden Ansprüche, **dadurch gekennzeichnet, dass** das optische System (3) einen Aktuator (21) zum Drehen des Lichtleiters (5) um eine Achse (A) umfasst, die durch die mindestens eine LED-Lichtquelle (2) verläuft und eine Symmetrieachse der ersten gekrümmten Oberfläche (15) bildet; wobei die Achse (A), die durch die mindestens eine LED-Lichtquelle (2) verläuft, vorzugsweise eine im Wesentlichen vertikale Achse ist.

9. Scheinwerfer oder Scheinwerfer eines Fahrzeugs (22), **dadurch gekennzeichnet, dass** er mindestens eine Beleuchtungsvorrichtung (1) nach einem der Ansprüche 1 bis 8 umfasst, die in einem schalenförmigen Gehäuse (23) untergebracht und dazu bestimmt ist, an einem Fahrzeug montiert zu werden, und eine durchsichtige Abdeckung (24) aufweist, die das schalenförmige Gehäuse an der Vorderseite verschließt und durch welche die Beleuchtungsvorrichtung (1) von außen sichtbar ist.

10. Fahrzeug mit einem Scheinwerfer oder einem Scheinwerfer nach Anspruch 9.

## Revendications

1. Dispositif d'éclairage (1) pour véhicules comprenant au moins une source de lumière à DEL (2) et un système optique (3) pour collecter et distribuer, selon un profil photométrique souhaité, la lumière produite par ladite source de lumière à DEL (2) ; le système optique (3) comprenant un guide de lumière (5) formé par un bloc (6) de matériau normalement perméable à la lumière ; dans lequel, en combinaison :
i)- le bloc (6) de matériau normalement perméable à la lumière est façonné de manière à définir un élément solide tridimensionnel en forme de coin, délimité par une face supérieure (7) de celui-ci, une face inférieure (8) de celui-ci, deux surfaces latérales (9) opposées de celui-ci, au moins une face avant (10) de celui-ci définissant une première extrémité longitudinale (12) de celui-ci et au moins une face arrière (11) de celui-ci, définissant une seconde extrémité longitudinale (13) de celui-ci, opposée à la première extrémité longitudinale (12) ;
ii)- les surfaces latérales (9) sont incurvées et convergent l'une vers l'autre sur le côté de ladite seconde extrémité longitudinale (13), de sorte que le bloc (6) de matériau normalement perméable à la lumière s'élargit en se déployant vers la première extrémité (12) ; lesdites surfaces latérales (9) incurvées opposées étant configurées de façon à provoquer une réflexion interne totale, ou au moins partielle, de la lumière à l'intérieur du bloc (6) de matériau normalement perméable à la lumière ;
iii)- l'au moins une face arrière (11) est agencée en regard de ladite au moins une source de lumière à DEL (2) et est pourvue d'une concavité (14), ou la définit, qui entoure, au moins partiellement, ladite au moins une source de lumière à DEL (2) et qui est délimitée par une première surface incurvée (15) en forme d'arc configurée pour collecter au moins une partie de la lumière émise par ladite au moins une source de lumière à DEL (2) à l'intérieur du bloc (6) de matériau normalement perméable à la lumière ;
iv)- le bloc (6) de matériau normalement perméable à la lumière est traversé par au moins une perforation (16) réalisée transversalement auxdites faces supérieure (7) et inférieure (8) et interposée entre la face avant (10) et la face arrière (11) ; l'au moins une perforation (16) étant délimitée de façon interne par une première surface optique (17) agencée en regard de la face avant (10), et par une seconde surface optique (18) agencée en regard de la face arrière (11), l'au moins une perforation (16) étant configurée pour définir une lentille pneumatique interposée entre la concavité (14) de l'au moins une face arrière (11) et l'au moins une face avant (10) ;
**caractérisé en ce que**
v)- la face supérieure (7) et/ou la face inférieure (8) est agencée obliquement par rapport à un plan horizontal, de sorte que les faces supérieure et inférieure convergent l'une vers l'autre
soit
vi)- sur le côté de ladite seconde extrémité longitudinale (13) provoquant une diminution progressive d'une épaisseur, mesurée verticalement, du bloc (6) de matériau normalement perméable à la lumière vers la seconde extrémité longitudinale (13) de celui-ci ;
ou
vii)- sur le côté de ladite première extrémité longitudinale (12) provoquant une diminution progressive d'une épaisseur, mesurée verticalement, du bloc (6) de matériau normalement perméable à la lumière vers la première extrémité longitudinale (12) de celui-ci.

2. Dispositif d'éclairage selon la revendication 1, **caractérisé en ce que** l'au moins une face avant (10) est définie par une seconde surface incurvée (19) configurée pour collecter la lumière depuis l'intérieur du bloc (6) de matériau normalement perméable à la lumière, pour former et émettre à l'extérieur un faisceau lumineux façonné (4), contrôlé au moins dans une direction verticale.

3. Dispositif d'éclairage selon l'une quelconque des revendications précédentes, **caractérisé en ce que** la face supérieure (7) et la face inférieure (8) sont sensiblement plates et non parallèles l'une à l'autre.

4. Dispositif d'éclairage selon l'une quelconque des revendications précédentes, **caractérisé en ce que** la face supérieure (7) et/ou la face inférieure (8) est pourvue d'une pluralité de bosselages (20) configurés pour éliminer sélectivement une partie de la lumière émise par la source de lumière à DEL (2) et collectée depuis la première surface incurvée (15), afin de définir, à la sortie de la face avant (10), un faisceau lumineux (4) pourvu d'une coupure ou ligne de démarcation clair-sombre.

5. Dispositif d'éclairage selon l'une quelconque des revendications précédentes, **caractérisé en ce que** lesdites surfaces latérales (9) incurvées opposées sont configurées pour former des réflecteurs incurvés adaptés pour contrôler, en particulier, horizontalement, un faisceau lumineux (4) sortant formé par la face avant (10) et émis par celle-ci à l'extérieur du bloc (6) de matériau normalement perméable à la lumière.

6. Dispositif d'éclairage selon l'une quelconque des revendications précédentes, **caractérisé en ce qu'**au moins une, ou les deux, desdites première et seconde surfaces optiques (17, 18) est convexe et/ou concave et façonnée sous la forme d'une surface incurvée continue ou d'une surface discontinue échelonnée formée par des sections rectilignes et/ou incurvées.

7. Dispositif d'éclairage selon l'une quelconque des revendications précédentes, **caractérisé en ce que** les deux desdites première et seconde surfaces optiques (17, 18) sont façonnées de sorte que ladite au moins une perforation (16)
- s'amincit dans le centre dudit bloc (6) de matériau normalement perméable à la lumière et s'élargit vers lesdites surfaces latérales (9) incurvées de ce dernier ; ou
- s'élargit dans le centre dudit bloc (6) de matériau normalement perméable à la lumière et s'amincit vers lesdites surfaces latérales (9) incurvées de ce dernier.

8. Dispositif d'éclairage selon l'une quelconque des revendications précédentes, **caractérisé en ce que** ledit système optique (3) comprend un actionneur (21) pour faire tourner ledit guide de lumière (5) autour d'un axe (A) passant par ladite au moins une source de lumière à DEL (2) et constituant un axe de symétrie de ladite première surface incurvée (15) ; ledit axe (A) passant par ladite au moins une source de lumière à DEL (2) étant de préférence un axe sensiblement vertical.

9. Projecteur ou phare d'un véhicule (22) **caractérisé en ce qu'**il comprend au moins un dispositif d'éclairage (1) selon l'une des revendications 1 à 8 logé dans un boîtier en forme de coupe (23) et conçu pour être monté sur un véhicule et une protection transparente (24), qui ferme le boîtier en forme de coupe sur le devant et à travers laquelle ledit dispositif d'éclairage (1) est visible depuis l'extérieur.

10. Véhicule comprenant un projecteur ou un phare selon la revendication 9.
